# FASCICULE DE BREVET EUROPEEN

(11) **EP 1 803 258 B1**
(45) Date de publication et mention de la délivrance du brevet: **13.08.2008**
(21) Numéro de dépôt: 05807272.9
(22) Date de dépôt: 28.09.2005
(51) Int. Cl.: H04L 12/46, H04L 12/56

(54) **PROCEDE ET DISPOSITIF DE CREATION D'UN TUNNEL DANS UN RESEAU DE TELECOMMUNICATION A PERMUTATION D ETIQUETTES**
VERFAHREN UND EINRICHTUNG ZUM ERZEUGEN EINES TUNNELS IN EINEM LABEL-SWITCHING-TELEKOMMUNIKATIONSNETZ
METHOD AND DEVICE FOR CREATING A TUNNEL IN A LABEL-SWITCHED TELECOMMUNICATION NETWORK

(30) Priorité: 08.10.2004 FR 0410674
(43) Date de publication de la demande: 04.07.2007
(73) Titulaire: France Telecom S.A., 75015 Paris (FR)
(72) Inventeur: LE ROUX, Jean-Louis, F-22300 Lannion (FR); FROMENTOUX, Gaël, F-22560 Pleumeur Bodou (FR); VU DUONG, Thang, F-22300 Ploulech (FR)
(86) Numéro de dépôt international: PCT/FR2005/002405
(87) Numéro de publication internationale: WO 2006/040430

(56) Documents cités:
- EP-A- 1 187 406
- WO-A-02/082720
- WO-A-03/010923

## Description

La présente invention concerne un procédé et un dispositif de création d'un tunnel pour le transport d'au moins un flux de données dans un réseau de télécommunication à permutation d'étiquettes

La norme MPLS, publiée sous les auspices de l'IETF (Internet Engineering Task Force) est une technique basée sur la permutation d'étiquettes (label switching) permettant de créer un réseau orienté connexion à partir d'un réseau de type datagramme comme le réseau IP. On trouvera une documentation détaillée du protocole MPLS sous le site www.ietf.org.

WO 02/082720 divulgue un procédé dans lequel des mesures de trafic admis dans un réseau de communication à permutation d'étiquettes sont effectuées et les capacités respectives de certains tunnels sont modifiées en fonction de ces mesures de trafic.

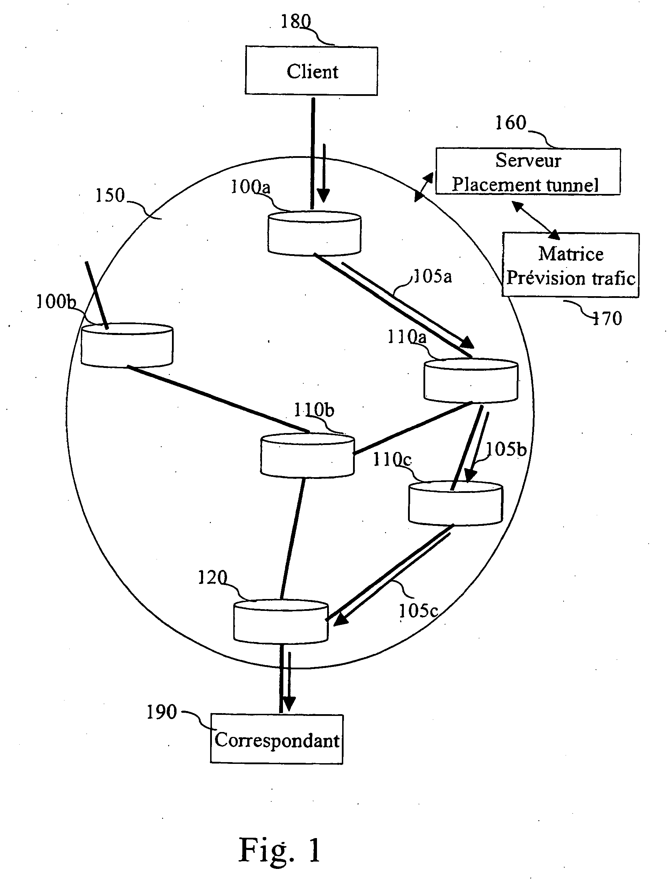

On a représenté de manière schématique en Fig. 1 un réseau MPLS 150, comprenant une pluralité de routeurs dénommés LSR (Label Switching Roulers) tels que 100a, 100b, 110a, 110b, 110c et 120 reliés entre eux par des liens IP. Lorsqu'un paquet IP arrive sur un routeur périphérique d'entrée 100a ou 100b, dénommé Ingress LSR, ce dernier lui attribue une étiquette en fonction de son entête IP et la concatène audit paquet. Le routeur qui reçoit le paquet étiqueté remplace l'étiquette (entrante) par une étiquette sortante en fonction de sa table d'acheminement et le processus se répète de routeur en routeur jusqu'au routeur périphérique de sortie 120 (encore dénommé Egress LSR) qui supprime l'étiquette avant de transmettre le paquet. Alternativement, la suppression d'étiquette peut être déjà effectuée par le pénultième routeur puisque le routeur de sortie 120 n'utilise pas l'étiquette entrante. Un routeur LSR utilise l'étiquette du paquet entrant (étiquette entrante) pour déterminer le port de sortie et l'étiquette du paquet sortant (étiquette sortante). Le chemin parcouru par un paquet à travers le réseau du routeur d'entrée 1 00a jusqu'au routeur de sortie 120 est appelé chemin à étiquettes commutées ou LSP (Label Switched Path). Selon l'exemple de la Fig. 1 dans lequel un chemin est représenté par les flèches 105a, 105b et 105c, les routeurs LSR 110a, 110c traversés par le chemin et distincts des routeurs périphériques d'entrée 100a et de sortie 120 sont appelés routeurs de transit. D'autre part, on appelle classe d'équivalence ou FEC (Forward Equivalence Class) l'ensemble des paquets IP qui sont transmis le long d'un même chemin.

Le protocole MPLS permet de forcer les paquets IP à suivre un chemin LSP préétabli qui n'est en général pas le chemin IP optimal en terme de nombre de bonds ou de métrique de chemin. La technique de détermination du chemin ou des chemins à emprunter est appelée ingénierie de trafic ou MPLS-TE (pour MPLS Traffic Engineering). La détermination du chemin prend en compte des contraintes sur les ressources disponibles (constraint based routing), notamment en bande passante sur les différents liens du réseau. Au contraire du routage IGP classique opérant selon un mode bond par bond (hop-by-hop routing), la détermination d'un chemin LSP est effectuée selon un mode dit explicite (explicitly routed LSP ou ER-LSP) dans lequel on détermine certains ou tous les noeuds du chemin du routeur d'entrée jusqu'au routeur de sortie. Lorsque tous les noeuds du chemin sont fixés, on parle de routage explicite au sens strict. Un chemin déterminé selon un mode explicite est encore appelé tunnel MPLS.

La recommandation RFC 3564 intitulée « Requirements for Support of Differentiated Services-aware MPLS Trafic engineering » appelée par la suite DS-TE permet d'établir des tunnels MPLS garantissant une qualité de service. Un tunnel DS-TE qu'il soit uni ou bidirectionnel est établi entre deux routeurs de périphérie selon un chemin qui respecte un ensemble de contraintes de qualité de service telles que la bande passante, la classe de service et le délai.

La détermination d'un tunnel est effectuée de manière centralisée ou distribuée. Les systèmes centralisés de détermination de tunnels tentent de coordonner le placement des tunnels dans le réseau de communication à permutation d'étiquettes de manière à optimiser l'utilisation des ressources du réseau. Ces systèmes sont peu adaptés à une utilisation dans un réseau de grande échelle et sont peu robustes aux modifications brutales des besoins des clients.

Les systèmes distribués de détermination de tunnels tentent d'effectuer le placement des tunnels dans le réseau de manière à réagir aux évolutions des besoins des clients. Le placement de tunnel est généralement effectué par des dispositifs communément appelés têtes de tunnels. Les placements de tunnels dans les systèmes distribués ne permettent pas un placement coordonné des tunnels dans le réseau de communication à permutation d'étiquettes et sont souvent gros consommateurs en ressources du réseau.

L'invention a pour but de résoudre les inconvénients de l'art antérieur en proposant un procédé et un dispositif de création de tunnel dans un réseau de télécommunication à permutation d'étiquettes dans lequel la création de certains tunnels est effectuée de manière coordonnée de manière à optimiser les ressources du réseau de télécommunication et dans lequel la création d'autres tunnels puisse être effectuée rapidement et à la demande de manière à faire face à une augmentation imprévisible du trafic dans le réseau de télécommunication.

A cette fin, selon un premier aspect, l'invention propose un procédé de création d'un tunnel pour le transport d'au moins un flux de données dans un réseau de télécommunication à permutation d'étiquettes, le réseau de télécommunication comportant au moins un routeur périphérique d'entrée, un serveur étant apte à définir des tunnels, dits tunnels statiques, dans le réseau de télécommunication à partir de prévisions de trafic dans le réseau de télécommunication.

Conformément à l'invention, ce procédé comporte les étapes suivantes effectuées par un routeur périphérique d'entrée recevant une requête d'un client pour le transfert d'un flux de données dans le réseau de télécommunication de :
- détermination si un tunnel statique défini par le serveur dans le réseau de télécommunication est apte à transporter le flux de données,
- création d'un tunnel, dit tunnel dynamique, adapté au transport du flux de données dans le réseau de télécommunication si aucun tunnel statique défini par le serveur n'est apte à transporter le flux de données.

Corrélativement, l'invention concerne un dispositif de création d'un tunnel pour le transport d'au moins un flux de données dans un réseau de télécommunication à permutation d'étiquettes, le réseau de télécommunication étant constitué d'au moins un routeur périphérique d'entrée, un serveur étant apte à définir des tunnels dans le réseau de télécommunication à partir de prévisions de trafic dans le réseau de télécommunication.

Conformément à l'invention, ce dispositif de création de tunnel est inclus dans un routeur périphérique d'entrée et le dispositif de création de tunnel comporte :
- des moyens de détermination si un tunnel défini par le serveur dans le réseau de télécommunication est apte à transporter le flux de données,
- des moyens de création d'un tunnel adapté au transport du flux de données si aucun tunnel statique défini par le serveur n'est apte à transporter le flux de données.

Ainsi, la création des tunnels statiques est effectuée de manière coordonnée par un serveur et pour ainsi optimiser les ressources du réseau de télécommunication ; la création de tunnels dynamiques est effectuée de manière distribuée par chaque routeur périphérique d'entrée rapidement et à la demande de manière à faire face à la saturation des tunnels statiques. En effectuant la création de tunnels de deux manières différentes, l'une centralisée, l'autre distribuée, la création de tunnel est optimisée. Enfin, en ne créant des tunnels dynamiques seulement lorsque les tunnels statiques ne sont pas aptes à transporter, on évite que trop de tunnels dynamiques ne soient créés.

Selon un autre aspect de l'invention, à chaque tunnel sont entre autres associés des paramètres de classe de service, de bande passante réservée du tunnel et de délai de transit.

Ainsi, il est possible de garantir dans le réseau de télécommunication une qualité de service très précise.

Selon un autre aspect de l'invention, préalablement à la création d'un tunnel dynamique, on détermine si, parmi des tunnels dynamiques préalablement créés, au moins un tunnel dynamique est apte à transporter le flux de données.

Ainsi, lorsqu'un tunnel dynamique est créé, on recherche à utiliser les ressources allouées à ce tunnel dans le réseau de télécommunication de manière optimale.

Selon un autre aspect de l'invention, si aucun tunnel dynamique préalablement créé n'est apte à transporter le flux de données, on détermine, préalablement à la création d'un tunnel dynamique, si parmi des tunnels dynamiques préalablement créés, au moins un tunnel dynamique est apte à transporter le flux de données si la bande passante réservée dudit tunnel est augmentée d'une valeur prédéterminée.

Ainsi, en modifiant des paramètres d'un tunnel dynamique préalablement créé, il n'est pas nécessaire de créer un nouveau tunnel dynamique et on évite ainsi une surmultiplication des tunnels dynamiques dans le réseau de télécommunication.

Selon un autre aspect de l'invention, si, parmi des tunnels dynamiques préalablement créés, au moins un tunnel dynamique est apte à transporter le flux de données si la bande passante réservée dudit tunnel est augmentée d'une valeur prédéterminée, on compare la bande passante réservée dudit tunnel augmentée d'une valeur prédéterminée à un seuil prédéterminé et on sélectionne le ou les tunnels dont la bande passante réservée augmentée d'une valeur prédéterminée est inférieure à un seuil prédéterminé.

Ainsi, l'augmentation de la bande passante réservée des tunnels dynamiques est contrôlée.

Selon un autre aspect de l'invention, on détermine si le routage du ou des tunnels sélectionnés dans le réseau de télécommunication à permutation d'étiquettes doit être modifié et on sélectionne le ou les tunnels dont le routage dans le réseau de télécommunication à permutation d'étiquettes ne doit pas être modifié.

Selon un autre aspect de l'invention, chaque tunnel est au moins caractérisé par une bande passante résiduelle et lorsque plusieurs tunnels dont le routage dans le réseau de télécommunication à permutation d'étiquettes ne doit pas être modifié sont sélectionnés, on sélectionne, parmi les tunnels dont le routage dans le réseau de télécommunication à permutation d'étiquettes ne doit pas être modifié, le ou les tunnels dont la bande passante résiduelle est la plus faible parmi les tunnels dynamiques aptes à transporter le flux de données et lorsque plusieurs tunnels dynamiques aptes à transporter le flux de données ont la même bande passante résiduelle, on sélectionne le ou les tunnels dynamiques dont la bande passante réservée est la plus faible, et lorsque plusieurs tunnels dynamiques sont aptes à transporter le flux de données et ont la même bande passante réservée, on sélectionne le tunnel dynamique dont le délai est le plus grand.

Ainsi, lorsqu'un tunnel dynamique est créé, on recherche à utiliser les ressources allouées à ce tunnel dans le réseau de télécommunication de manière optimale.

Selon un autre aspect de l'invention, le flux de données est destiné à un correspondant du client et le réseau de télécommunication comporte au moins un routeur périphérique de sortie auquel le correspondant du client est associé et à chaque tunnel sont en outre associées l'adresse d'un routeur périphérique d'entrée, l'adresse d'un routeur périphérique de sortie, la bidirectionnalité ou non dudit tunnel, la bande passante logique utilisée dans le tunnel correspondant à la somme des bandes passantes des flux de données transportés dans le tunnel et la bande passante résiduelle du tunnel correspondant à la différence entre la bande passante réservée du tunnel dans le réseau de télécommunication et la bande passante logique utilisée dans le tunnel.

Ainsi, il est possible de garantir dans le réseau de télécommunication une qualité de service très précise.

Selon un autre aspect de l'invention, un tunnel est apte à transporter un flux de données si l'adresse du routeur périphérique de sortie auquel le correspondant du client est associé est égale à l'adresse du routeur périphérique de sortie du tunnel, l'adresse du routeur périphérique d'entrée auquel le client est associé est égale à l'adresse du routeur périphérique d'entrée du tunnel, la classe de service du tunnel est au moins supérieure à la classe de service du flux de données, le délai de transit du tunnel est inférieur ou égal au délai de transit du flux de données et si la bande passante résiduelle du tunnel est supérieure ou égale à la bande passante du flux de données.

Ainsi, il est possible de garantir pour un flux de données ayant un besoin en qualité de service précis cette qualité de service dans le réseau de télécommunication.

Selon un autre aspect de l'invention, lorsque plusieurs tunnels sont aptes à transporter le flux de données, on sélectionne le ou les tunnels dont la bande passante résiduelle est la plus faible parmi les tunnels statiques aptes à transporter le flux de données et lorsque plusieurs tunnels aptes à transporter le flux de données ont la même bande passante résiduelle, on sélectionne le ou les tunnels dont la bande passante réservée est la plus faible et lorsque plusieurs tunnels sont aptes à transporter le flux de données et ont la même bande passante réservée, on sélectionne le tunnel dont le délai est le plus grand.

Ainsi, on recherche à utiliser les ressources allouées à un tunnel statique dans le réseau de télécommunication de manière optimale.

L'invention concerne aussi le programme d'ordinateur stocké sur un support d'informations, ledit programme comportant des instructions permettant de mettre en oeuvre le procédé précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un réseau de télécommunication utilisant le protocole MPLS dans lequel la présente invention est implémentée ;
la Fig. 2 représente une représentation fonctionnelle d'un routeur périphérique selon la présente invention ;
la Fig. 3 représente l'algorithme exécuté par l'agent d'allocation et de répartition des flux de données dans les tunnels compris dans un routeur périphérique selon la présente invention ;
la Fig. 4 représente un exemple du contenu de la table des tunnels statiques de l'agent d'allocation et de répartition des flux de données dans les tunnels ;
la Fig. 5 représente un exemple du contenu de la table des flux admis de l'agent d'allocation et de répartition des flux de données dans les tunnels.

La **Fig. 1** représente un réseau de télécommunication utilisant le protocole MPLS dans lequel la présente invention est implémentée.

Dans le réseau de télécommunication à permutation d'étiquettes 150, la création de tunnels DS-TE entre les routeurs périphériques du réseau est effectuée à la fois de manière centralisée par un serveur de placement de tunnels 160 et de manière distribuée par chaque routeur périphérique d'entrée 100 du réseau MPLS 150, En effet deux types de tunnels DS-TE sont utilisés dans le système selon la présente invention. Le premier type de tunnels DS-TE appelés tunnels statiques sont calculés et établis par le serveur de placement de tunnels 160 en fonction de prévisions du trafic dans le réseau MPLS 150 et de statistiques de trafic. Les prévisions et les statistiques de trafic sont fournies au serveur de placement de tunnels 160 par une matrice de prévision de trafic 170. Ces tunnels statiques sont préférentiellement utilisés lorsque les flux de données transitant dans le réseau MPLS 150 sont conformes aux prévisions et statistiques. Le serveur de placement de tunnels 160 détermine les tunnels statiques ainsi que leurs contraintes de manière coordonnée pour optimiser l'utilisation des ressources du réseau MPLS 150. La détermination des tunnels statiques dans le réseau MPLS 150 est effectuée périodiquement par le serveur de placement de tunnels 160. En effet une telle détermination nécessite des calculs longs surtout lorsque le réseau MPLS 150 est important. Seul le serveur de placement de tunnels 160 peut modifier les paramètres des tunnels statiques.

Les tunnels DS-TE de second type, appelés tunnels dynamiques, sont établis par un périphérique d'entrée 100 du réseau MPLS 150 lorsque les flux de données devant transiter dans le réseau MPLS 150 dépassent les prévisions et donc lorsque les tunnels statiques sont saturés.

Chaque routeur périphérique d'entrée 100 ou de sortie 120 comporte les moyens aptes à mettre en oeuvre la présente invention. Ces moyens sont activés dans un routeur périphérique lorsqu'un client 180 rattaché audit routeur périphérique souhaite qu'une session soit établie avec un correspondant 190. Dans ce cas, le routeur périphérique d'entrée 100 est le rougeur périphérique auquel le client est rattaché, le routeur périphérique de sortie 120 est le routeur périphérique auquel le correspondant est rattaché.

Il est à remarquer ici que par souci de simplification de la Fig. 1, un seul client 180 et un seul correspondant sont représentés en Fig. 1. Bien entendu, un nombre plus important de clients et de correspondants sont rattachés aux routeurs périphériques d'entrée 100 et aux routeurs périphériques de sortie 120 du réseau MPLS 150.

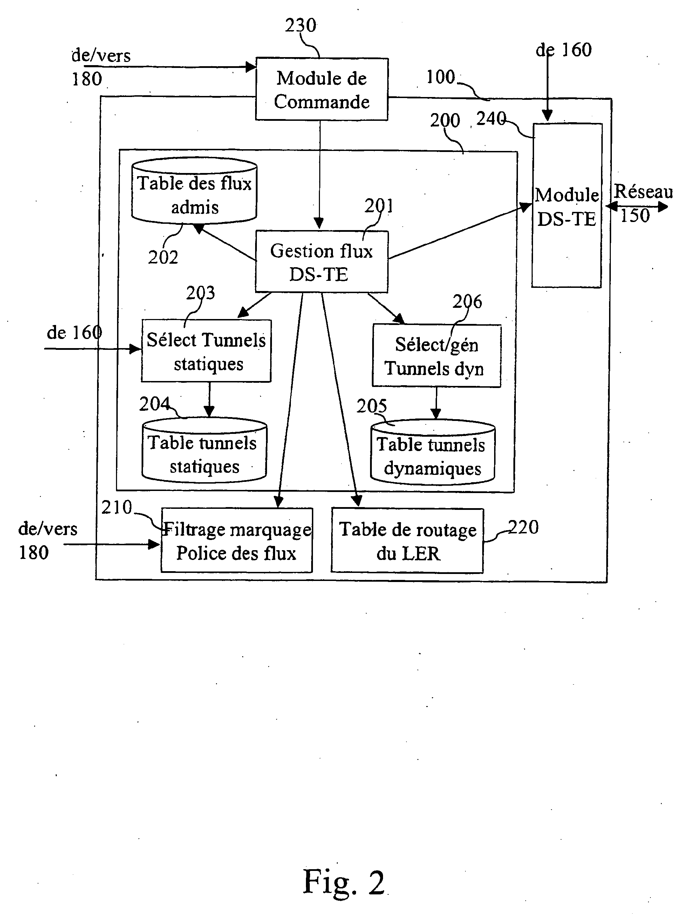

La **Fig. 2** représente une représentation fonctionnelle d'un routeur périphérique selon la présente invention.

Un tunnel DS-TE noté td est utilisé pour router un ou plusieurs flux de données DS-TE ayant les mêmes caractéristiques que celles du tunnel DS-TE entre des clients rattachés au même routeur périphérique d'entrée et des correspondants rattachés au même routeur périphérique de sortie. A un tunnel DS-TE est attribuée une classe de services. Un tunnel DS-TE assure une qualité de service précise, il est caractérisé par les paramètres suivants : l'adresse du routeur périphérique d'entrée ou source notée @s_t(td), au sens que le routeur périphérique d'entrée est initiateur de la session selon le protocole RSVP-TE, l'adresse du routeur périphérique de sortie ou destinataire notée @d_t(td) au sens que le routeur périphérique de sortie est destinataire de la session selon le protocole RSVP-TE, l'identifiant logique selon le protocole RSVP-TE, la bidirectionnalité ou non du tunnel, la classe de service DiffServ notée c_t(td), la bande passante réservée du tunnel notée bp_t(tf) et le délai de transit noté d_t(td). RSVP-TE est l'acronyme du protocole de signalisation (Resource reSerVation Protocol for Traffic Engineering). On trouvera une description du protocole RSVP-TE dans la recommandation RFC 3209 de D. Adwuche et al. intitulé « RSVP-TE : extensions to RSVP for LSP tunnels » disponible sous le site de l'IETF. Une classe de service DiffServ est une classe définissant des priorités. Les classes DiffServ sont décrites dans la recommandation de l'IETF RFC 2475 intitulée « An architecture for Differentiated Services ».

Un tunnel DS-TE est établi entre un routeur périphérique d'entrée 100 qui initie la signalisation du tunnel et un routeur périphérique de sortie 120 qui termine la signalisation du tunnel. Ce tunnel est établi par le routeur périphérique d'entrée 100. Deux routeurs périphériques peuvent être reliés par une pluralité de tunnels, par exemple un tunnel par classe de service.

Un flux de données DS-TE est un ensemble de paquets qui est échangé entre deux applications. Ce flux de données est agrégé dans un tunnel DS-TE entre le routeur périphérique d'entrée 100 auquel le client 180 est rattaché et le routeur périphérique de sortie 120 auquel le correspondant 190 est rattaché.

Un flux de données DS-TE peut être uni ou bidirectionnel, il est caractérisé par les paramètres suivants :
- le numéro de flux noté id_f(fd) ;
- les cinq paramètres d'identification réseau que sont l'adresse du client source notée @s_f(fd), l'adresse de destination du correspondant notée @d_s(fd), le protocole utilisé noté pr(fd), le numéro de port du client source noté ps(fd) et le numéro de port destination du correspondant noté pd(fd) ;
- la bidirectionnalité ou non du flux notée b_f(fd)
- les trois paramètres de qualité de service que sont la bande passante notée bp_f(fd), le délai de transit noté d_f(fd) et la classe de service diffserv notée c_f(fd).

Selon l'invention, un tunnel DS-TE est caractérisé par deux nouveaux paramètres : la bande passante logique notée bplu(td) utilisée dans le tunnel qui correspond à la somme des bandes passantes des flux de données DS-TE routés dans le tunnel td et la bande passante résiduelle notée bpr(td) d'un tunnel DS-TE qui correspond à la différence entre la bande passante réservée par le tunnel td dans le réseau notée bp(td) et la bande passante logique bplu(td) utilisée dans le tunnel.

Selon l'invention, un tunnel td peut être utilisé pour router un nouveau flux de données DS-TE si et seulement si les clients sont raccordés au même routeur périphérique d'entrée 100 et les correspondants ou destinataires 190 au même routeur périphérique de sortie 120, la direction du flux de données DS-TE b_f(fd) correspond à la direction du tunnel, la classe de service du flux de données DS-TE correspond à la classe de service du tunnel, la bande passante du flux de données est inférieure ou égale à la bande passante résiduelle du tunnel, de délai de transit du tunnel est inférieur ou égal au délai de transit du flux de données.

Un routeur périphérique d'entrée 100 comprend un module de commande 230. Le module de commande 230 reçoit des requêtes d'établissement de session de clients 180 qui sont associés au routeur périphérique d'entrée 100. Le module de commande 230 détermine si un client 180 est accrédité à demander l'établissement de sessions de transfert de flux de données et dans l'affirmative transfère la requête au module de gestion des flux DS-TE 201 de l'agent d'allocation et de répartition des flux de données dans les tunnels 200. La vérification de l'accréditation est par exemple effectuée en consultant le fournisseur de services non représenté en Fig. 1 auquel est abonné le client 180 ayant émis la requête. Il est à remarquer ici que le module de commande 230 peut, en variante, ne pas être intégré au routeur périphérique d'entrée 100.

Le routeur périphérique d'entrée 100 comprend un module DS-TE 240. Le module DS-TE 240 est renseigné sur la topologie du réseau et les contraintes affectant les différents liens du réseau MPLS 150. Le module DS-TE 240 détermine et transmet aux routeurs voisins 110a ou 110b des messages indiquant ses liens immédiats et les contraintes (ou attributs) qui y sont associées. Ces messages sont ensuite propagés de routeur en routeur par des messages IGP étendu, selon un mécanisme d'inondation (flooding) jusqu'à ce que tous les routeurs soient renseignés. Ainsi, chaque routeur dispose en propre d'une base de données (dite TED pour Traffic Engineering Database) lui donnant la topologie du réseau et ses contraintes. Le module DS-TE 240 est apte à déterminer le chemin à commutation d'étiquettes par exemple au moyen de l'algorithme de Dijkstra, le chemin le plus court satisfaisant à l'ensemble des contraintes (Constraint Shortest Path First ou CSPF). Le module DS-TE 240 est apte à signaler le chemin déterminé aux routeurs du chemin LSP au moyen du protocole de signalisation RSVP-TE. Le module DS-TE 240 reçoit les informations représentatives des différents tunnels statiques créés par le serveur de placement de tunnels 160.

Le routeur périphérique d'entrée 100 comporte aussi un module de filtrage et de police des flux de données 210. Le module de filtrage et de police des flux de données 210 est apte à autoriser le transfert des flux de données transmis par un client 180 sur le réseau MPLS 150 et à limiter le débit des flux de données au débit qui lui est autorisé. Le module de filtrage et de police des flux de données 210 est contrôlé par le module de gestion des flux de données DS-TE 201 de l'agent d'allocation et de répartition des flux de données dans les tunnels 200.

Le routeur périphérique d'entrée 100 comporte aussi une table de routage 220 qui détermine, lorsqu'un paquet est reçu d'un client 180 par le routeur périphérique d'entrée 100, l'étiquetage de celui-ci.

Le routeur périphérique d'entrée 100 comporte, selon l'invention, un agent d'allocation et de répartition des flux de données dans les tunnels 200. L'agent d'allocation et de répartition des flux de données dans les tunnels 200 contrôle l'admission et l'allocation des flux de données DS-TE dans les tunnels statiques et dynamiques du réseau MPLS 150. L'agent d'allocation et de répartition des flux de données dans les tunnels 200 crée des tunnels dynamiques dans le réseau MPLS 150 lorsque les tunnels statiques du réseau MPLS 150 sont saturés.

L'agent d'allocation et de répartition des flux de données dans les tunnels 200 est constitué d'une table des flux admis 202, d'un module de sélection de tunnels statiques 203, d'une table des tunnels statiques 204, d'un module de sélection et/ou de génération de tunnels dynamiques 206, d'une table des tunnels dynamiques 205 et d'un module de gestion des flux de données DS-TE 201.

Le module de gestion des flux de données DS-TE 201 traite les requêtes de transfert de flux de données en provenance du module de commande 230 précédemment décrit. Le module de gestion des flux de données DS-TE 201 commande le module de sélection de tunnels statiques 203 pour que celui-ci recherche dans la table des tunnels statiques 204 s'il existe un tunnel statique apte à transporter le flux de données. Le module de sélection de tunnels statiques 203 retourne au module de gestion des flux de données DS-TE 201 le résultat de la recherche. Le module de gestion des flux de données DS-TE 201 commande le module de sélection et/ou de génération de tunnels dynamiques 206 pour que celui-ci recherche dans la table des tunnels dynamiques 205 s'il existe un tunnel dynamique apte à transporter le flux de données ou génère un tunnel dynamique apte à transporter le flux de données.

Les tables de tunnels statiques 204 et dynamiques 205 mémorisent respectivement l'ensemble des tunnels statiques et dynamiques créés dans le réseau MPLS 150 ainsi que leurs paramètres respectifs.

La table de flux de données admis 202 mémorise pour chacun des flux de données admis par le module de gestion des flux DS-TE 201 les paramètres du flux de données, l'identifiant du tunnel transportant ledit flux de données ainsi que l'identifiant du routeur périphérique de sortie 120.

Lorsque le serveur de placement de tunnels 160 crée des tunnels statiques dans le réseau MPLS 150, ceux-ci ainsi que leurs paramètres sont transférés au module de sélection de tunnels statiques 203 qui effectue une mise à jour de la table des tunnels statiques 204.

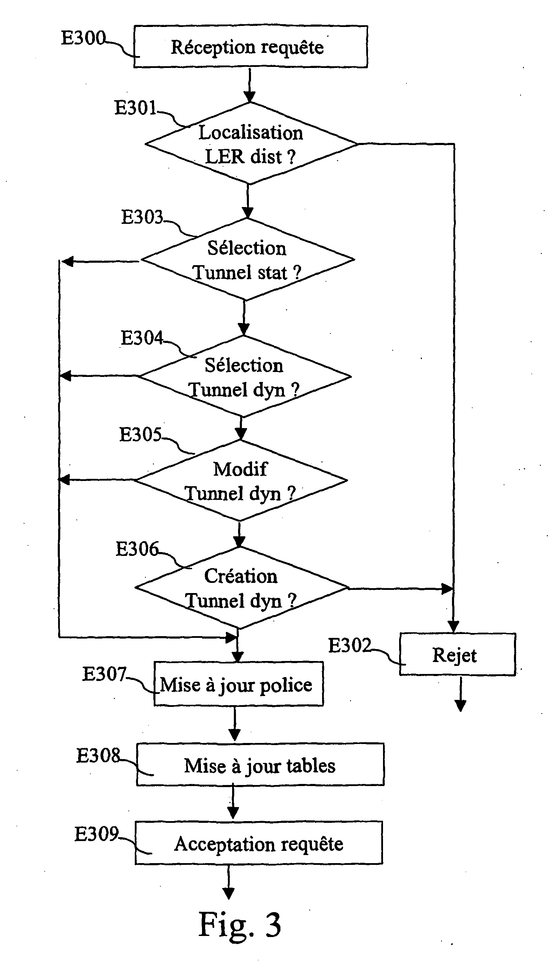

La **Fig. 3** représente l'algorithme exécuté par l'agent d'allocation et de répartition des flux de données dans les tunnels compris dans un routeur périphérique selon la présente invention.

Lorsqu'un client 180 transfère au module de commande 230 une requête d'établissement d'un flux de données, le module de commande 230, sous réserve d'une vérification de l'accréditation du client 180 à demander un tel établissement, transfère la requête au module de gestion des flux de données DS-TE 201 de l'agent d'allocation et de répartition des flux de données dans les tunnels.

A l'étape E300, le module de gestion des flux de données DS-TE 201 reçoit la requéte d'admission qui comprend les paramètres du flux de données que sont le numéro de flux id_f(fd), l'adresse du client 180 source @s_f(fd), l'adresse de destination du correspondant 190 @d_f(fd), le protocole utilisé pr(fd), le numéro de port du client 180 source ps(fd), le numéro de port destination du correspondant 190 pd(fd), la bidirectionnalité ou non du flux b_f(fd) et les trois paramètres de qualité de service que sont la bande passante bp_f(fd), le délai de transit d_f(fd) et la classe de service diffserv c_f(fd).

A l'étape suivante E301, le module de gestion des flux de données DS-TE 201 détermine le routeur de périphérique de sortie 120 auquel le destinataire 190 du flux de données est rattaché. Le module de gestion des flux de données DS-TE 201 détermine le routeur de périphérique de sortie 120 en interrogeant la table de routage 220 du routeur périphérique d'entrée et en utilisant comme clé l'adresse du correspondant @d_f(fd). Si aucun routeur périphérique de sortie 120 n'est associé à l'adresse de destination du correspondant @d_f(fd), le module de gestion des flux de données DS-TE 201 passe à l'étape E302 et transfère au module de commande 230 un message de rejet d'établissement d'un flux de données. Ce message comprend préférentiellement des informations représentatives de l'échec de l'identification du routeur périphérique de sortie 120. Ce message est ensuite transféré par le module de commande 230 au client 180 ayant effectué la requête. L'étape E302 effectuée, le module de gestion des flux de données DS-TE 201 arrête le présent algorithme et retourne à l'étape E300 en attente d'une nouvelle requête d'admission à traiter. Si le routeur de périphérique de sortie 120 est déterminé, le module de gestion des flux de données DS-TE 201 passe à l'étape E303.

A l'étape E303, le module de gestion des flux de données DS-TE 201 détermine si un tunnel statique généré par le serveur de placement de tunnels 160 en fonction d'informations délivrées par la matrice de prévision de trafic 170 est apte à assurer le transfert du flux de données. Pour cela le module de gestion des flux de données DS-TE 201 transfère au module de sélection des tunnels statiques 203 les paramètres du flux de données que sont la bidirectionnalité ou non du flux b_f(fd), l'identifiant de routeur périphérique de sortie 120 précédemment déterminé à l'étape E302 et les trois paramètres de qualité de service que sont la bande passante bp_f(fd), le délai de transit d_f(fd) et la classe de service diffserv.c_f(fd).

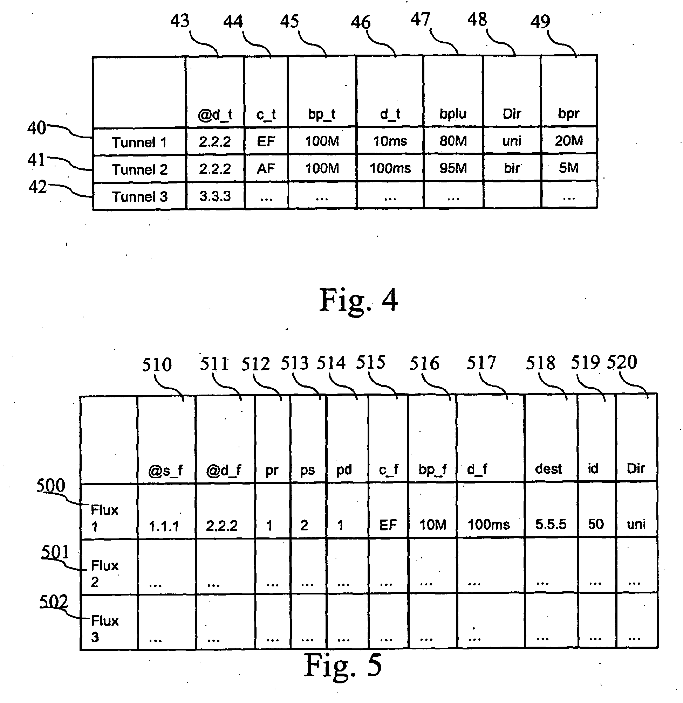

Le module de sélection des tunnels statiques 203 consulte la table des tunnels statiques 204 et détermine si un tunnel statique est apte à assurer le transfert du flux de données. Un exemple du contenu de la table des tunnels statiques est représenté en Fig. 4.

La table de la **Fig. 4** est constituée de trois lignes notées 40 à 42 et sept colonnes notées 43 à 49. A chaque tunnel statique créé par le serveur de placement de tunnels 160 correspond une ligne du tableau de la Fig. 4. Par souci de simplification, seulement trois tunnels sont représentés en Fig. 4. La ligne 40 comprend les paramètres du tunnel noté tunnel 1, la ligne 41 comprend les paramètres du tunnel noté tunnel 2 et la ligne 42 comprend les paramètres du tunnel noté tunnel 3. Bien entendu un nombre plus important de tunnels sont créés dans le réseau MPLS 150. La colonne 43 comprend l'identifiant @d_t du routeur périphérique de sortie des tunnels 1, 2 et 3, la colonne 44 comprend la classe DiffServ c_t(td) des tunnels 1, 2 et 3, la colonne 45 comprend la bande passante réservée du tunnel bp_t(tf) des tunnels 1, 2 et 3, la colonne 46 comprend le délai de transit d_t(td) des tunnels 1, 2 et 3, la colonne 47 comprend la bande passante logique notée bplu(td) utilisée dans les tunnels 1, 2 et 3, la colonne 48 comprend le paramètre b_t(td) représentatif de la direction des tunnels 1, 2 et 3 et la colonne 49 comprend la bande passante résiduelle bpr(td) des tunnels 1, 2 et 3.

Le module de sélection des tunnels statiques 203 détermine si au moins un tunnel statique est apte à assurer le transfert du flux de données en comparant les paramètres du flux de données aux paramètres de chaque tunnel compris dans la table des tunnels statiques. Un tunnel statique est apte à transporter un flux de données si @d_t est égale à l'identifiant du routeur périphérique de sortie déterminé à l'étape E302, la classe DiffServ c_t(td) est au moins supérieure à la classe diffserv c_f(fd), b_t(td) comprend au moins b_f(td), le délai de transit d_t(td) est inférieur ou égal à d_f(fd) et enfin si la bande passante résiduelle bpr(td) est supérieure ou égale à bp_f(fd).

Il est à remarquer ici que dans un mode de réalisation préféré et lorsque plusieurs tunnels sont aptes à transporter le flux de données, le module de sélection des tunnels statiques 203 sélectionne le tunnel statique dont la bande passante résiduelle bplu(td) est la plus faible parmi les tunnels statiques aptes à transporter le flux de données. Lorsque plusieurs tunnels statiques sont aptes à transporter le flux de données et ont la même bande passante résiduelle, le module de sélection des tunnels statiques 203 sélectionne le tunnel statique dont la bande passante réservée bp_t(td) est la plus faible. Lorsque plusieurs tunnels statiques sont aptes à transporter le flux de données et ont la même bande passante réservée, le module de sélection des tunnels statiques 203 sélectionne le tunnel statique dont le délai d_t(td) est le plus grand.

Lorsque le module de sélection des tunnels statiques 203 a sélectionné un tunnel statique, celui-ci met à jour la table des tunnels statiques 204 en modifiant les paramètres du tunnel dans les colonnes 47 et 49 de la Fig. 4. Le paramètre bplu est augmenté de la bande passante du flux de données et le paramètre bpr est décrémenté de la bande passante du flux de données. Le module de sélection des tunnels statiques 203 transfère ensuite un message de réponse comprenant l'identifiant du tunnel sélectionné au module de gestion des flux de données DS-TE 201.

A la réception de ce message, le module de sélection des tunnels statiques 203 passe à l'étape E307 qui consiste à effectuer une mise à jour du module de marquage et de police des flux 210 précédemment décrit pour que celui-ci autorise le transfert du flux de données.

Cette opération effectuée, le module de sélection des tunnels statiques 203 passe à l'étape E308 qui consiste à effectuer une mise à jour de la table de routage 220 et de la table des flux admis 202 en insérant le flux de données, l'identifiant du tunnel sélectionné dans celles-ci ainsi que la bande passante du flux de données. Un exemple de la table des flux admis 202 est représenté à la Fig. 5.

La **Fig. 5** est constituée de trois lignes notées 500 à 502 et de onze colonnes notées 510 à 520. A chaque flux de données admis par le module de gestion des flux de données DS-TE 201 correspond une ligne du tableau de la Fig. 5. Par souci de simplification, seulement trois flux de données sont représentés en Fig. 5, la ligne 500 comprend les paramètres du flux de données noté Flux 1, la ligne 501 comprend les paramètres du flux de données noté Flux 2 et la ligne 502 comprend les paramètres du flux de données noté Flux 3. Bien entendu un nombre plus important de flux de données sont admis dans le réseau MPLS 150. La colonne 510 comprend l'adresse du client source @s_f(fd) des Flux 1, 2 et 3, la colonne 511 comprend l'adresse de destination du correspondant @d_s(fd) des Flux 1, 2 et 3, la colonne 512 comprend le protocole utilisé pr(fd) par les Flux 1, 2 et 3, la colonne 513 comprend le numéro de port du client source ps(fd) des Flux 1, 2 et 3, la colonne 514 comprend le numéro de port destination du correspondant pd(fd) des Flux 1, 2 et 3, la colonne 515 comprend la classe de service diffserv c_f(fd) des Flux 1, 2 et 3, la colonne 516 comprend la bande passante bp_f(fd) des Flux 1, 2 et 3, la colonne 517 comprend le délai de transit d_f(fd) des Flux 1, 2 et 3, la colonne 518 comprend l'identifiant du routeur périphérique de sortie déterminé à l'étape E301 des Flux 1, 2 et 3, la colonne 519 comprend l'identifiant du tunnel sélectionné pour assurer le transport des flux de données Flux 1, 2 et 3 et la colonne 520 comprend des informations indiquant si les flux de données Flux 1, 2 et 3 sont respectivement bidirectionnels ou unidirectionnels.

Cette opération effectuée, le module de gestion des flux de données DS-TE 201 passe à l'étape E309 qui consiste à générer un message d'acceptation d'établissement d'un flux de données à destination du client 180 ayant initié la requête par l'intermédiaire du module de commande 230.

Cette étape effectuée, le module de gestion des flux de données DS-TE 201 arrête le présent algorithme et retourne à l'étape E300 en attente d'une nouvelle requête d'admission à traiter.

Si le module de sélection des tunnels statiques 203 détermine à l'étape E303 qu'aucun des tunnels statiques n'est apte à assurer le transfert du flux de données, celui-ci retourne un message d'échec au module de gestion des flux de données DS-TE 201. Ceci est par exemple le cas lorsque toutes les capacités des tunnels statiques sont utilisées, c'est-à-dire lorsque les demandes des clients 180 sont supérieures aux prévisions ei statistiques de trafic fournies au serveur de placement de tunnels 160 par la matrice de prévision de trafic 170. A la réception de ce message, le module de gestion des flux de données DS-TE 201 passe à l'étape E304.

A l'étape E304, le module de gestion des flux de données DS-TE 201 détermine si un tunnel dynamique précédemment généré par le module de sélection et/ou de génération de tunnels dynamiques 206 est apte à assurer le transfert du flux de données. Pour cela, le module de gestion des flux de données DS-TE 201 transfère au module de sélection et/ou de génération de tunnels dynamiques 206 les paramètres du flux de données que sont la bidirectionnalité ou non du flux b_f(fd), l'identifiant de routeur périphérique dé sortie 120 précédemment déterminé à l'étape E302 et les trois paramètres de qualité de service que sont la bande passante bp_f(fd), le délai de transit d_f(fd) et la classe de service diffserv c_f(fd).

Le module de sélection et/ou de génération de tunnels dynamiques 206 consulte la table des tunnels dynamiques 205 et détermine si un tunnel dynamique est apte à assurer le transfert du flux de données. La table des tunnels dynamiques comporte les mêmes paramètres que ceux compris dans la table des tunnels statiques telle que représentée en Fig. 4, elle ne sera pas plus décrite.

Le module de sélection et/ou de génération de tunnels dynamiques 206 détermine si au moins un tunnel dynamique est apte à assurer le transfert du flux de données en comparant les paramètres du flux de données aux paramètres de chaque tunnel compris dans la table des tunnels dynamiques 205. Un tunnel dynamique est apte à transporter un flux de données si @d_t est égale à l'identifiant de routeur périphérique de sortie déterminé à l'étape E302, la classe DiffServ c_t(td) est au moins supérieure à la classe diffserv c_f(fd), b_t(td) comprend au moins b_f(td), le délai de transit d_t(td) est inférieur ou égal à d_f(fd) et enfin si la bande passante résiduelle bpr(td) est supérieure ou égale à bp_f(fd).

Il est à remarquer ici que dans un mode de réalisation préféré et lorsque plusieurs tunnels sont aptes à transporter le flux de données, le module de sélection et/ou de génération de tunnels dynamiques 206 sélectionne le tunnel dynamique dont la bande passante résiduelle bpr(td) est la plus faible parmi les tunnels dynamiques aptes à transporter le flux de données. Lorsque plusieurs tunnels dynamiques sont aptes à transporter le flux de données et ont la même bande passante résiduelle, le module de sélection et/ou de génération de tunnels dynamiques 206 sélectionne le tunnel dynamique dont la bande passante réservée bp_t(td) est la plus faible. Lorsque plusieurs tunnels dynamiques sont aptes à transporter le flux de données et ont la même bande passante réservée, le module de sélection et/ou de génération de tunnels dynamiques 206 sélectionne le tunnel dynamique dont le délai d_t(td) est le plus grand.

Lorsque le module de sélection et/ou de génération de tunnels dynamiques 206 a sélectionné un tunnel dynamique, celui-ci met à jour la table des tunnels dynamiques 205 en modifiant les paramètres du tunnel sélectionnés. Le paramètre bplu est augmenté de la bande passante du flux de données et le paramètre bpr est décrémenté de la bande passante du flux de données. Le module de sélection et/ou de génération de tunnels dynamiques 206 transfère ensuite un message de réponse comprenant l'identifiant du tunnel sélectionné au module de gestion des flux de données DS-TE 201 ainsi que l'identifiant du routeur périphérique de destination. A la réception de ce message, le module de gestion des flux de données DS-TE 201 passe à l'étape E307 qui consiste à effectuer une mise à jour du module de marquage et de police des flux 210 pour que celui-ci autorise le transfert du flux de données.

Cette opération effectuée, le module de gestion des flux de données DS-TE 201 passe à l'étape E308 et effectue une mise à jour de la table de routage 220 et de la table des flux admis 202 en insérant le flux de données, l'identifiant du tunnel sélectionné dans celles-ci ainsi que la bande passante du flux de données.

Cette opération effectuée, le module de gestion des flux de données DS-TE 201 passe à l'étape E309 qui consiste à générer un message d'acceptation d'établissement d'un flux de données à destination du client 180 ayant initié la requête par l'intermédiaire du module de commande 230.

Cette étape effectuée, le module de gestion des flux de données DS-TE 201 arrête le présent algorithme et retourne à l'étape E300 en attente d'une nouvelle requête d'admission à traiter.

Lorsqu'aucun tunnel dynamique n'est apte à transporter le flux de données, le module de sélection et/ou de génération de tunnels dynamiques 206 passe de l'étape E304 à l'étape suivante E305. A cette étape, le module de sélection et/ou de génération de tunnels dynamiques 206 tente de modifier la bande passante d'un des tunnels dynamiques référencés dans la table des tunnels dynamiques 205.

Selon l'invention, quatre paramètres sont utilisés pour la modification de la bande passante d'un tunnel dynamique : l'incrément de bande passante noté IBD correspondant au pas d'augmentation qui peut être effectué pour un tunnel dynamique, la bande passante minimale BDMIN qui peut être réservée pour un tunnel dynamique, la bande passante maximale notée BDMAX qui correspond à la bande passante maximale qui peut être réservée pour un tunnel dynamique et enfin le décrément de bande passante noté DBD correspondant au pas de décrémentation qui peut être effectuée pour un tunnel dynamique.

Pour cela, le module de sélection et/ou de génération de tunnels dynamiques 206 détermine dans la table des tunnels dynamiques 205 quels sont les tunnels dynamiques qui sont aptes à transporter le flux de données si leur bande passante réservée *bp_t(td)* est augmentée de l'incrément IBD. Si aucun tunnel dynamique n'est apte à transporter le flux de données si sa bande passante réservée *bp_t(td)* est augmentée de l'incrément IBD, le module de sélection et/ou de génération de tunnels dynamiques 206 passe à l'étape E306 qui sera décrite ultérieurement. S'il existe au moins un tunnel dynamique qui est apte à transporter le flux de données si sa bande passante réservée *bp_t(td)* est augmentée de l'incrément IBD, le module de sélection et/ou de génération de tunnels dynamiques 206 détermine si le ou les tunnels dynamiques qui sont aptes à transporter le flux de données, si leur bande passante réservée *bp_t(td)* est augmentée de l'incrément IBD, ont une bande passante augmentée inférieure à BDMAX. Les tunnels dynamiques ayant une bande passante augmentée inférieure à BDMAX sont alors sélectionnés.

Si aucun tunnel dynamique a une bande passante augmentée inférieure à BDMAX, le module de sélection et/ou de génération de tunnels dynamiques 206 passe à l'étape E306.

Le module de gestion des flux DS-TE 201 interroge le module DS-TE 240 afin que celui-ci détermine si le routage de chaque tunnel sélectionné doit être ou non modifié dans le réseau MPLS 150. Ceci est effectué par le module de détermination du chemin le plus court satisfaisant à l'ensemble des contraintes CSPF (Constraint Shortest Path First). Si le routage de chaque tunnel sélectionné doit être modifié, le module de sélection et/ou de génération de tunnels dynamiques 206 passe à l'étape E306.

Si dans les tunnels sélectionnés, il existe des tunnels dont le routage ne doit pas être modifié, le module de sélection et/ou de génération de tunnels dynamiques 206 sélectionne le tunnel dynamique qui a la plus faible bande passante réservée et modifie la bande passante réservée de ce tunnel dynamique en ajoutant à celle-ci la valeur de l'incrément IBD. Le module de sélection et/ou de génération de tunnels dynamiques 206 modifie la table des tunnels dynamiques 205 et notifie au module DS-TE 240 la modification de ce tunnel dynamique pour que le module DS-TE 240 mette à jour la configuration de ce tunnel.

Cette opération effectuée, le module de sélection et/ou de génération de tunnels dynamiques 206 transfère ensuite un message de réponse comprenant l'identifiant du tunnel sélectionné au module de gestion des flux de données DS-TE 201 ainsi que l'identifiant du routeur périphérique de destination. A la réception de ce message, le module de gestion des flux de données DS-TE 201 passe à l'étape E307.

Les étapes E307 à E309 sont exécutées de la même manière que celle précédemment décrite, elles ne seront pas plus explicitées.

Ces étapes effectuées, le module de gestion des flux de données DS-TE 201 arrête le présent algorithme et retourne à l'étape E300 en attente d'une nouvelle requête d'admission à traiter.

A l'étape E306, le module de gestion des flux DS-TE 201 interroge le module DS-TE 240 afin que celui-ci détermine la plus grande bande passante disponible dans le réseau MPLS 150 qui soit apte à répondre aux critères du flux de données. Cette plus grande bande passante disponible est notée pgbpd et est déterminée par le module de détermination du chemin le plus court satisfaisant à l'ensemble des contraintes CSPF.

A cette étape, le module dé sélection et/ou de génération de tunnels dynamiques 206 tente de créer un nouveau tunnel dynamique dans le réseau MPLS 150. Pour cela, le module de sélection et/ou de génération de tunnels dynamiques 206 compare la plus grande bande passante disponible dans le réseau MPLS 150 qui soit apte à répondre aux critères du flux de données à la bande passante minimum BMIN qui peut être réservée pour un tunnel dynamique. Si la plus grande bande passante disponible pgbpd est inférieure à BMIN, la tentative de création d'un nouveau tunnel dynamique échoue et le module de sélection et/ou de génération de tunnels dynamiques 206 transfère un message d'échec à destination du module de gestion des flux de données DS-TE 201. A la réception de ce message, le module de gestion des flux de données DS-TE 201 passe à l'étape E302 et transfère au module de commande 230 un message de rejet d'établissement de session. Ce message comprend préférentiellement des informations représentatives de la saturation des ressources du réseau MPLS 150. Ce message est ensuite transféré par le module de commande 230 au client 180 ayant effectué la requête. L'étape E302 effectuée, le module de gestion des flux de données DS-TE 201 arrête le présent algorithme et retourne à l'étape E300 en attente d'une nouvelle requête d'admission à traiter.

Si la plus grande bande passante disponible pgbpd est supérieure à BMIN mais inférieure à la bande passante bp_f(fd) du flux de données, la tentative de création d'un nouveau tunnel dynamique échoue et le module de sélection et/ou de génération de tunnels dynamiques 206 transfère un message d'échec à destination du module de gestion des flux de données DS-TE 201. A la réception de ce message, le module de gestion des flux de données DS-TE 201 passe à l'étape E302 et transfère au module de commande 230 un message de rejet d'établissement de session comprenant préférentiellement des informations représentatives de la saturation des ressources du réseau MPLS 150. Ce message est ensuite transféré par le module de commande 230 au client 180 ayant effectué la requête. L'étape E302 effectuée, le module de gestion des flux de données DS-TE 201 arrête le présent algorithme et retourne à l'étape E300 en attente d'une nouvelle requête d'admission à traiter.

Si la plus grande bande passante disponible pgbpd est supérieure à BMIN et à la bande passante bp_f(fd) du flux de données, le module de sélection et/ou de génération de tunnels dynamiques 206 commande le module DS-TE 240 pour que celui-ci configure un nouveau tunnel dynamique dont la bande passante est égale au maximum de BMIN et bp_f(fd) soit Max(BMIN, bp_f(fd)). Ce nouveau tunnel dynamique est apte à supporter les paramètres du flux de données à transporter. Lorsque le tunnel dynamique est créé, le module DS-TE 240 retourne un message de confirmation de configuration au module de sélection et/ou de génération de tunnels dynamiques 206. Le module de sélection et/ou de génération de tunnels dynamiques 206 modifie la table des tunnels dynamiques 205 de manière à inclure celui-ci dans la table. Les paramètres de bande passante pour ce nouveau tunnel dynamique sont bp_t(td)= *Max(BMIN, bp_f(fd))*, bplu(td)=bp_f(fd) et bpr(td)= *Max(BMIN, bp_f(fd))-*bp_f(fd). Le module de sélection et/ou de génération de tunnels dynamiques 206 transfère ces informations au module de gestion des flux 201 qui met à jour la table des flux admis 202 en associant le flux de données au nouveau tunnel dynamique créé. L'identifiant du tunnel créé est transféré au module de gestion des flux 201. Cette opération effectuée, l'algorithme passe à l'étape E307.

Lors de l'étape E307, le modulé de gestion des flux de données DS-TE 201 effectue une mise à jour du module de marquage et de police des flux précédemment décrit pour que celui-ci autorise le transfert du flux de données par le routeur périphérique d'entrée 100.

Cette opération effectuée, le module de gestion des flux de données DS-TE 201 passe à l'étape E308 qui consiste à effectuer une mise à jour de la table de routage 220 et de la table des flux admis 202 en insérant le flux de données ainsi que l'identifiant du tunnel sélectionné dans celles-ci.

Cette opération effectuée, le module de gestion des flux de données DS-TE 201 passe à l'étape E309 qui consiste à générer un message d'acceptation à destination du client 180 ayant initié la requête par l'intermédiaire du module de commande 230.

Cette étape effectuée, le module de gestion des flux de données DS-TE 201 arrête le présent algorithme et retourne à l'étape E300 en attente d'une nouvelle requête d'admission à traiter.

Lorsqu'un routeur périphérique d'entrée reçoit une requête de fermeture d'un flux de données transporté par un tunnel statique, le module de gestion des flux de données DS-TE 201 met à jour la table des flux admis 202 en supprimant ce flux de données de celle-ci et met à jour le module de filtrage marquage et police des flux 210 ainsi que la table de routage du LER 220. Le module de gestion des flux de données DS-TE 201 commande le module de sélection de tunnels statiques 203 pour que celui-ci modifie la table des tunnels statiques 204.

Lorsqu'un routeur périphérique d'entrée reçoit une requête de fermeture d'un flux de données transporté par un tunnel dynamique, le module de gestion des flux de données DS-TE 201 commande le module de sélection et/ou de génération de tunnels dynamiques 206 pour que celui-ci modifie la table des tunnels dynamiques 205. La bande passante logique bplu(td) utilisée dans le tunnel est décrémentée de la bande passante du flux de données à supprimer et la bande passante résiduelle bpr(td) du tunnel est augmentée de la bande passante du flux de données à supprimer.

Si la bande passante résiduelle bpr(td) dans le tunnel est supérieure au décrément de bande passante DBD, la bande passante réservée du tunnel dynamique est décrémentée de la DBD. Il est à remarquer ici que préférentiellement, la valeur de DBD est supérieure à IBD. Ceci permet d'éviter tout risque d'oscillation quant à la définition de la bande passante réservée des tunnels dynamiques créés et modifiés conformément à la présente invention.

Il est à remarquer ici que lorsqu'un tunnel dynamique ne transporte plus de flux de données, c'est-à-dire lorsque la bande passante logique bplu(td) utilisée dans le tunnel est nulle, le tunnel dynamique est supprimé par le module de sélection et/ou de génération de tunnels dynamiques 206.

Bien entendu, la présente invention n'est nullement limitée aux modes de réalisation décrits ici, mais englobe, bien au contraire, toute variante à la portée de l'homme du étier.

## Revendications

1. Procédé de création d'un tunnel pour le transport d'au moins un flux de données dans un réseau de télécommunication à permutation d'étiquettes (150), le réseau de télécommunication comportant au moins un routeur périphérique d'entrée (100a), un serveur (160) étant apte à définir des tunnels, dits tunnels statiques, dans le réseau de télécommunication (150) à partir de prévisions de trafic dans le réseau de télécommunication, **caractérisé en ce que** le procédé comporte les étapes effectuées par un routeur périphérique d'entrée (100a) recevant une requête d'admission d'un client (180) pour le transfert d'un flux de données dans le réseau de télécommunication de :
- détermination (E303) si un tunnel statique défini par le serveur dans le réseau de télécommunication est apte à transporter le flux de données,
- création d'un tunnel (E306), dit tunnel dynamique, adapté au transport du flux de données dans le réseau de télécommunication si aucun tunnel statique défini par le serveur n'est apte à transporter le flux de données.

2. Procédé selon la revendication 1, **caractérisé en ce qu'**à chaque tunnel sont entre autres associés des paramètres de classe de service, de bande passante réservée du tunnel et de délai de transit.

3. Procédé selon la revendication 2, **caractérisé en ce que** préalablement à l'étape de création d'un tunnel dynamique, le procédé comporte une étape de détermination (E304) si parmi des tunnels dynamiques préalablement créés au moins un tunnel dynamique est apte à transporter le flux de données.

4. Procédé selon la revendication 3, **caractérisé en ce que** si aucun tunnel dynamique préalablement créé n'est apte à transporter le flux de données, le procédé comporte en outre une étape, exécutée préalablement à l'étape de création d'un tunnel dynamique, de détermination si (E305), parmi des tunnels dynamiques préalablement créés, au moins un tunnel dynamique est apte à transporter le flux de données si la bande passante réservée dudit tunnel est augmentée d'une valeur prédéterminée.

5. Procédé selon la revendication 4, **caractérisé en ce que** si, parmi des tunnels dynamiques préalablement créés, au moins un tunnel dynamique est apte à transporter le flux de données si la bande passante réservée dudit tunnel est augmentée d'une valeur prédéterminée, le procédé comporte en outre les étapes de comparaison de la bande passante réservée dudit tunnel augmentée d'une valeur prédéterminée à un seuil prédéterminé et de sélection du ou des tunnels dont la bande passante réservée augmentée d'une valeur prédéterminée est inférieure à un seuil prédéterminé.

6. Procédé selon la revendication 5, **caractérisé en ce que** le procédé comporte en outre les étapes de détermination si le routage du ou des tunnels sélectionnés dans le réseau de télécommunication à permutation d'étiquettes doit être modifié et de sélection du ou des tunnels dont le routage dans le réseau de télécommunication à permutation d'étiquettes ne doit pas être modifié.

7. Procédé selon la revendication 3, **caractérisé en ce que** un tunnel est **caractérisé** au moins par une bande passante résiduelle et lorsque plusieurs tunnels dont le routage dans le réseau de télécommunication à permutation d'étiquettes ne doit pas être modifié sont sélectionnés, le procédé comporte une étape de sélection, parmi les tunnels dynamiques dont le routage dans le réseau de télécommunication à permutation d'étiquettes ne doit pas être modifié, du ou des tunnels dont la bande passante résiduelle est la plus faible parmi les tunnels dynamiques aptes à transporter le flux de données et lorsque plusieurs tunnels dynamiques aptes à transporter le flux de données ont la même bande passante résiduelle, le procédé comporte une étape de sélection du ou des tunnels dynamiques dont la bande passante réservée est la plus faible et lorsque plusieurs tunnels dynamiques sont aptes à transporter le flux de données et ont la même bande passante réservée, le procédé comporte une étape de sélection du tunnel dynamique dont le délai de transit est le plus grand.

8. Procédé selon l'une quelconque des revendications 2 à 7, **caractérisé en ce que** le flux de données est destiné à un correspondant du client, le réseau de télécommunication comporte au moins un routeur périphérique de sortie auquel le correspondant du client est associé et **en ce que**, à chaque tunnel sont en outre associées l'adresse d'un routeur périphérique d'entrée, l'adresse d'un routeur périphérique de sortie, la bidirectionnalité ou non dudit tunnel, la bande passante logique utilisée dans le tunnel correspondant à la somme des bandes passantes des flux de données transportés dans le tunnel et la bande passante résiduelle du tunnel correspondant à la différence entre la bande passante réservée du tunnel dans le réseau de télécommunication et la bande passante logique utilisée dans le tunnel.

9. Procédé selon la revendication 8, **caractérisé en ce que** à chaque flux de données sont associés l'adresse du client, l'adresse du correspondant, la bidirectionnalité ou non du flux, la bande passante, le délai de transit et la classe de service dudit flux de données.

10. Procédé selon la revendication 9, **caractérisé en ce qu'**un tunnel est apte à transporter un flux de données si l'adresse du routeur périphérique de sortie auquel le correspondant du client est associé est égale à l'adresse du routeur périphérique de sortie du tunnel, l'adresse du routeur périphérique d'entrée auquel le client est associé est égale à l'adresse du routeur périphérique d'entrée du tunnel, la classe de service du tunnel est au moins supérieure à la classe de service du flux de données, le délai de transit du tunnel est inférieur ou égal au délai de transit du flux de données et si la bande passante résiduelle du tunnel est supérieure ou égale à la bande passante du flux de données.

11. Procédé selon la revendication 1, **caractérisé en ce que** lorsque plusieurs tunnels statiques sont aptes à transporter le flux de données, le procédé comporte une étape de sélection du ou des tunnels statiques dont la bande passante résiduelle est la plus faible parmi les tunnels statiques aptes à transporter le flux de données et lorsque plusieurs tunnels statiques aptes à transporter le flux de données ont la même bande passante résiduelle, le procédé comporte une étape de sélection du ou des tunnels statiques dont la bande passante réservée est la plus faible et lorsque plusieurs tunnels statiques sont aptes à transporter le flux de données et ont la même bande passante réservée, le procédé comporte une étape de sélection du tunnel statique dont le délai de transit est le plus grand.

12. Dispositif de création d'un tunnel pour le transport d'au moins un flux de données dans un réseau de télécommunication à permutation d'étiquettes (150), le réseau de télécommunication étant constitué d'au moins un routeur périphérique d'entrée (100a), d'un serveur (160) apte à définir des tunnels dans le réseau de télécommunication à partir de prévisions de trafic dans le réseau de télécommunication, **caractérisé en ce que** le dispositif de création de tunnel est inclus dans un routeur périphérique d'entrée (100) et **en ce que** le dispositif de création de tunnel comporte :
- des moyens de détermination (201, 203) si un tunnel défini par le serveur dans le réseau de télécommunication est apte à transporter le flux de données,
- des moyens de création (201, 205, 206) d'un tunnel adapté au transport du flux de données si aucun tunnel statique défini par le serveur n'est apte à transporter le flux de données.

13. Programme d'ordinateur stocké sur un support d'informations, ledit programme comportant des instructions permettant de mettre en oeuvre le procédé selon l'une quelconque des revendications 1 à 11, lorsqu'il est chargé et exécuté par un système informatique.

14. Routeur périphérique d'entrée (100) dans un réseau de télécommunication à permutation d'étiquettes (150) comprenant un dispositif de création de tunnel pour le transport d'au moins un flux de données dans le réseau selon la revendication 12.

15. Système de création d'un tunnel pour le transport d'au moins un flux de données dans un réseau de télécommunication à permutation d'étiquettes, comprenant au moins un routeur périphérique d'entrée (100) selon la revendication 14 et un serveur (160) agencé pour définir des tunnels, dits tunnels statiques, dans le réseau de télécommunication à partir de prévisions de trafic.

## Claims

1. Method for creating a tunnel for transporting at least one data flow in a label-switching telecommunication network (150), the telecommunication network comprising at least one ingress edge router (100a), a server (160) being capable of defining tunnels, called static tunnels, in the telecommunication network (150) based on traffic forecasts in the telecommunication network, **characterized in that** the method comprises the steps carried out by an ingress edge router (100a) receiving an admission request from a client (180) to transfer of a data flow in the telecommunication network of:
- determining (E303) whether a static tunnel defined by the server in the telecommunication network is capable of transporting the data flow,
- creating a tunnel (E306), called a dynamic tunnel, suitable for transporting the data flow in the telecommunication network if no static tunnel defined by the server is capable of transporting the data flow.

2. Method according to Claim 1, **characterized in that,** amongst other things, class of service, reserved bandwidth of the tunnel and transit delay parameters are associated with each tunnel.

3. Method according to Claim 2, **characterized in that** prior to the step of creating a dynamic tunnel, the method comprises a step of determining (E304) whether, amongst the previously created dynamic tunnels, at least one dynamic tunnel is capable of transporting the data flow.

4. Method according to Claim 3, **characterized in that,** if no previously created dynamic tunnel is capable of transporting the data flow, the method also comprises a step, executed prior to the step of creating a dynamic tunnel, of determining (E305) whether, amongst the previously created dynamic tunnels, at least one dynamic tunnel is capable of transporting the data flow if the reserved bandwidth of the said tunnel is increased by a predetermined value.

5. Method according to Claim 4, **characterized in that** if, amongst the previously created dynamic tunnels, at least one dynamic tunnel is capable of transporting the data flow, if the reserved bandwidth of the said tunnel is increased by a predetermined value, the method also comprises the steps of comparing the reserved bandwidth of the said tunnel increased by a predetermined value with a predetermined threshold and of selecting the tunnel(s) whose reserved bandwidth increased by a predetermined value is less than a predetermined threshold.

6. Method according to Claim 5, **characterized in that** the method also comprises the steps of determining whether the routing of the selected tunnel(s) in the label-switching telecommunication network must be modified and of selecting the tunnel(s) whose routing in the label-switching telecommunication network must not be modified.

7. Method according to Claim 3, **characterized in that** a tunnel is **characterized** at least by a residual bandwidth and when several tunnels, whose routing in the label-switching telecommunication network must not be modified, are selected, the method comprises a step of selecting, from the dynamic tunnels whose routing in the label-switching telecommunication network must not be modified, the tunnel(s) whose residual bandwidth is the smallest amongst the dynamic tunnels capable of transporting the data flow and when several dynamic tunnels capable of transporting the data flow have the same residual bandwidth, the method comprises a step of selecting the dynamic tunnel(s) whose reserved bandwidth is the smallest and when several dynamic tunnels are capable of transporting the data flow and have the same reserved bandwidth, the method comprises a step of selecting the dynamic tunnel whose transit delay is the greatest.

8. Method according to any one of Claims 2 to 7, **characterized in that** the data flow is intended for a correspondent of the client, the telecommunication network comprises at least one egress edge router with which the correspondent of the client is associated and **in that** the address of an ingress edge router, the address of an egress edge router, the bidirectionality or not of the said tunnel, the logical bandwidth used in the tunnel corresponding to the sum of the bandwidths of the data flows transported in the tunnel and the residual bandwidth of the tunnel corresponding to the difference between the reserved bandwidth of the tunnel in the telecommunication network and the logical bandwidth used in the tunnel are also associated with each tunnel.

9. Method according to Claim 8, **characterized in that** the address of the client, the address of the correspondent, the bidirectionality or not of the flow, the bandwidth, the transit delay and the class of service of the said data flow are associated with each data flow.

10. Method according to Claim 9, **characterized in that** a tunnel is capable of transporting a data flow if the address of the egress edge router with which the correspondent of the client is associated is equal to the address of the egress edge router of the tunnel, the address of the ingress edge router with which the client is associated is equal to the address of the ingress edge router of the tunnel, the class of service of the tunnel is at least greater than the class of service of the data flow, the transit delay of the tunnel is less than or equal to the transit delay of the data flow and if the residual bandwidth of the tunnel is greater than or equal to the bandwidth of the data flow.

11. Method according to Claim 1, **characterized in that,** when several static tunnels are capable of transporting the data flow, the method comprises a step of selecting the static tunnel(s) whose residual bandwidth is the smallest amongst the static tunnels capable of transporting the data flow and, when several static tunnels capable of transporting the data flow have the same residual bandwidth, the method comprises a step of selecting the static tunnel(s) whose reserved bandwidth is the smallest and, when several static tunnels are capable of transporting the data flow and have the same reserved bandwidth, the method comprises a step of selecting the static tunnel whose transit delay is the greatest.

12. Device for creating a tunnel for transporting at least one data flow in a label-switching telecommunication network (150), the telecommunication network being constituted of at least one ingress edge router (100a), a server (160) capable of defining tunnels in the telecommunication network based on traffic forecasts in the telecommunication network, **characterized in that** the tunnel-creation device is included in an ingress edge router (100) and **in that** the tunnel-creation device comprises:
- means (201, 203) for determining whether a tunnel defined by the server in the telecommunication network is capable of transporting the data flow,
- means (201, 205, 206) for creating a tunnel suitable for transporting the data flow if no static tunnel defined by the server is capable of transporting the data flow.

13. Computer program stored on a data medium, the said program comprising instructions making it possible to use the method according to any one of Claims 1 to 11, when it is loaded and run by a computer system.

14. Ingress edge router (100) in a label-switching telecommunication network (150) comprising a tunnel-creation device for transporting at least one data flow in the network according to Claim 12.

15. System for creating a tunnel for transporting at least one data flow in a label-switching telecommunication network, comprising at least one ingress edge router (100) according to Claim 14 and a server (160) arranged to define tunnels, called static tunnels, in the telecommunication network based on traffic forecasts.

## Patentansprüche

1. Verfahren zur Erzeugung eines Tunnels für den Transport mindestens eines Datenstroms in einem Telekommunikationsnetz mit Label-Switching (150), wobei das Telekommunikationsnetz mindestens einen peripheren Eingangsrouter (100a) aufweist, wobei ein Server (160) fähig ist, statische Tunnel genannte Tunnel im Telekommunikationsnetz (150) ausgehend von Verkehrsprognosen im Telekommunikationsnetz zu definieren, **dadurch gekennzeichnet, dass** das Verfahren die folgenden, von einem peripheren Eingangsrouter (100a), der eine Zugangsanforderung von einem Kunden (180) für die Übertragung eines Datenstroms im Telekommunikationsnetz empfängt, ausgeführten Schritte aufweist:
- Bestimmung (E303), ob ein vom Server im Telekommunikationsnetz definierter statischer Tunnel fähig ist, den Datenstrom zu transportieren,
- Erzeugung eines dynamischer Tunnel genannten Tunnels (E306), der für den Transport des Datenstrom im Telekommunikationsnetz geeignet ist, wenn kein vom Server definierter statischer Tunnel fähig ist, den Datenfluss zu transportieren.

2. Verfahren nach Anspruch 1, **dadurch gekennzeichnet, dass** jedem Tunnel unter anderen Parameter der Dienstklasse, der reservierten Bandbreite des Tunnels und der Transitzeit zugeordnet sind.

3. Verfahren nach Anspruch 2, **dadurch gekennzeichnet, dass** vor dem Schritt der Erzeugung eines dynamischen Tunnels das Verfahren einen Schritt der Bestimmung (E304) aufweist, ob unter den vorher erzeugten dynamischen Tunneln mindestens ein dynamischer Tunnel fähig ist, den Datenstrom zu transportieren.

4. Verfahren nach Anspruch 3, **dadurch gekennzeichnet, dass,** wenn kein vorher erzeugter dynamischer Tunnel fähig ist, den Datenstrom zu transportieren, das Verfahren außerdem einen vor dem Schritt der Erzeugung eines dynamischen Tunnels ausgeführten Schritt der Bestimmung (E305) aufweist, ob unter den vorher erzeugten dynamischen Tunneln mindestens ein dynamischer Tunnel fähig ist, den Datenstrom zu transportieren, wenn die reservierte Bandbreite des Tunnels um einen vorbestimmten Wert vergrößert wird.

5. Verfahren nach Anspruch 4, **dadurch gekennzeichnet, dass,** wenn unter den vorher erzeugten dynamischen Tunneln mindestens ein dynamischer Tunnel fähig ist, den Datenstrom zu transportieren, wenn die reservierte Bandbreite des Tunnels um einen vorbestimmten Wert vergrößert wird, das Verfahren außerdem die Schritte des Vergleichs der um einen vorbestimmten Wert vergrößerten reservierten Bandbreite des Tunnels mit einem vorbestimmten Schwellwert und der Auswahl des oder der Tunnel aufweist, deren um einen vorbestimmten Wert vergrößerte reservierte Bandbreite unter einem vorbestimmten Schwellenwert liegt.

6. Verfahren nach Anspruch 5, **dadurch gekennzeichnet, dass** das Verfahren außerdem die Schritte der Bestimmung, ob das Routen des oder der ausgewählten Tunnel im Telekommunikationsnetz mit Label-Switching verändert werden muss, und der Auswahl des oder der Tunnel enthält, deren Routen im Telekommunikationsnetz mit Label-Switching nicht verändert werden muss.

7. Verfahren nach Anspruch 3, **dadurch gekennzeichnet, dass** ein Tunnel durch mindestens einen Restbandbreite **gekennzeichnet** ist und, wenn mehrere Tunnel, deren Routen im Telekommunikationsnetz mit Label-Switching nicht verändert werden muss, ausgewählt werden, das Verfahren einen Schritt der Auswahl unter den dynamischen Tunneln, deren Routen im Telekommunikationsnetz mit Label-Switching nicht verändert werden muss, des oder der Tunnel aufweist, deren Restbandbreite die geringste unter den dynamischen Tunneln ist, die fähig sind, den Datenstrom zu transportieren, und, wenn mehrere dynamische Tunnel, die fähig sind, den Datenstrom zu transportieren, die gleiche Restbandbreite haben, das Verfahren einen Schritt der Auswahl des oder der dynamischen Tunnel aufweist, deren reservierte Bandbreite die geringste ist, und, wenn mehrere dynamische Tunnel fähig sind, den Datenstrom zu transportieren und die gleiche reservierte Bandbreite haben, das Verfahren einen Schritt der Auswahl des dynamischen Tunnels aufweist, dessen Transitzeit die größte ist.

8. Verfahren nach einem der Ansprüche 2 bis 7,
**dadurch gekennzeichnet, dass** der Datenstrom für einen Partner des Kunden bestimmt ist, das Telekommunikationsnetz mindestens einen peripheren Ausgangsrouter aufweist, dem der Partner des Kunden zugeordnet ist, und dass jedem Tunnel außerdem die Adresse eines peripheren Eingangsrouters, die Adresse eines peripheren Ausgangsrouters, die Bidirektionalität oder nicht des Tunnels zugeordnet sind, wobei die im Tunnel verwendete logische Bandbreite der Summe der Bandbreiten der im Tunnel transportierten Datenströme entspricht und die Restbandbreite des Tunnels der Differenz zwischen der reservierten Bandbreite des Tunnels im Telekommunikationsnetz und der im Tunnel verwendeten logischen Bandbreite entspricht.

9. Verfahren nach Anspruch 8, **dadurch gekennzeichnet, dass** jedem Datenstrom die Adresse des Kunden, die Adresse des Partners, die Bidirektionalität oder nicht des Stroms, die Bandbreite, die Transitzeit und die Dienstklasse des Datenstroms zugeordnet sind.

10. Verfahren nach Anspruch 9, **dadurch gekennzeichnet, dass** ein Tunnel fähig ist, einen Datenstrom zu transportieren, wenn die Adresse des peripheren Ausgangsrouters, dem der Partner des Kunden zugeordnet ist, gleich der Adresse des peripheren Ausgangsrouters des Tunnels ist, die Adresse des peripheren Eingangsrouters, dem der Kunde zugeordnet ist, gleich der Adresse des peripheren Eingangsrouters des Tunnels ist, die Dienstklasse des Tunnels mindestens höher als die Dienstklasse des Datenstroms ist, die Transitzeit des Tunnels geringer als die oder gleich der Transitzeit des Datenstroms ist und wenn die Restbandbreite des Tunnels größer als die oder gleich der Bandbreite des Datenstroms ist.

11. Verfahren nach Anspruch 1, **dadurch gekennzeichnet, dass,** wenn mehrere statische Tunnel fähig sind, den Datenstrom zu transportieren, das Verfahren einen Schritt der Auswahl des oder der statischen Tunnel aufweist, deren Restbandbreite die geringste unter den statischen Tunneln ist, die fähig sind, den Datenstrom zu transportieren, und, wenn mehrere statische Tunnel, die fähig sind, den Datenstrom zu transportieren, die gleiche Restbandbreite haben, das Verfahren einen Schritt der Auswahl des oder der statischen Tunnel aufweist, deren reservierte Bandbreite die geringste ist, und, wenn mehrere statische Tunnel fähig sind, den Datenstrom zu transportieren und die gleiche reservierte Bandbreite haben, das Verfahren einen Schritt der Auswahl des statischen Tunnels aufweist, dessen Transitzeit die größte ist.

12. Vorrichtung zur Erzeugung eines Tunnels für den Transport mindestens eines Datenstroms in einem Telekommunikationsnetz mit Label-Switching (150), wobei das Telekommunikationsnetz aus mindestens einem peripheren Eingangsrouter (100a) und aus einem Server (160) besteht, der fähig ist, ausgehend von Verkehrsprognosen im Telekommunikationsnetz Tunnel im Telekommunikationsnetz zu definieren, **dadurch gekennzeichnet, dass** die Vorrichtung zur Tunnelerzeugung in einem peripheren Eingangsrouter (100) enthalten ist und dass die Vorrichtung zur Tunnelerzeugung aufweist:
- Mittel zur Bestimmung (201, 203), ob ein vom Server im Telekommunikationsnetz definierter Tunnel fähig ist, den Datenstrom zu transportieren,
- Mittel zur Erzeugung (201, 205, 206) eines Tunnels, der für den Transport des Datenstroms geeignet ist, wenn kein vom Server (160) definierter statischer Tunnel fähig ist, den Datenstrom zu transportieren.

13. Computerprogramm, das in einem Datenträger gespeichert ist, wobei das Programm Anweisungen enthält, die es ermöglichen, das Verfahren nach einem der Ansprüche 1 bis 11 anzuwenden, wenn es von einem Datenverarbeitungssystem geladen und ausgeführt wird.

14. Peripherer Eingangsrouter (100) in einem Telekommunikationsnetz mit Label-Switching (150), der eine Vorrichtung zur Erzeugung eines Tunnels für den Transport von mindestens einem Datenstrom in dem Netz gemäß Anspruch 12 aufweist.

15. System zur Erzeugung eines Tunnels für den Transport mindestens eines Datenstroms in einem Telekommunikationsnetz mit Label-Switching, das mindestens einen peripheren Eingangsrouter (100) nach Anspruch 14 und einen Server (160) aufweist, der eingerichtet ist, um statische Tunnel genannte Tunnel im Telekommunikationsnetz ausgehend von Verkehrsprognosen zu definieren.
